**Europäisches Patentamt**

**European Patent Office**

**Office européen des brevets**

(11) Veröffentlichungsnummer: **0 112 589**
**B1**

(12) **EUROPÄISCHE PATENTSCHRIFT**

(45) Veröffentlichungstag der Patentschrift:
18.03.87

(21) Anmeldenummer: 83201639.8

(22) Anmeldetag: 17.11.83

(51) Int. Cl.⁴: **G 04 G 15/00, H 04 N 5/44**

(54) Anordnung zur programmierbaren Steuerung einer Rundfunk- und/oder Fernseh-Empfangseinrichtung.

(30) Priorität: 25.11.82 DE 3243610

(43) Veröffentlichungstag der Anmeldung:
04.07.84 Patentblatt 84/27

(45) Bekanntmachung des Hinweises auf die Patenterteilung:
18.03.87 Patentblatt 87/12

(84) Benannte Vertragsstaaten:
AT DE FR GB IT SE

(56) Entgegenhaltungen:
GB-A-2 034 995
US-A-4 228 543

NACHRICHTENTECHNISCHE ZEITSCHRIFT, Band 35, Nr. 6, Juni 1982, Seiten 368-376, Berlin, DE. H.E. KRÜGER: "Das digitale Fernsehkennungssystem ZPS"
FUNKSCHAU, Band 49, Nr. 17, August 1977, Seiten 763-768, München, DE. W. BAUM: "Farbfernsehgerät mit Mikroprozessor-Steuerung"
RADIO MENTOR ELECTRONIC, Band 40, Nr. 5, 1974, Seiten 185-193, München, DE. K. OTTENROTH: "Die elektronische Programm-Zeitung"

(73) Patentinhaber: **Philips Patentverwaltung GmbH, Billstrasse 80, D-2000 Hamburg 28 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten: **FR GB IT SE AT**

(72) Erfinder: **Hoffmann, Hans, Talstrasse 29, D-2085 Quickborn (DE)**
Erfinder: **Heubach, Frank, Kornacker 22, D-2000 Hamburg 54 (DE)**

(74) Vertreter: **Poddig, Dieter, Philips Patentverwaltung GmbH Billstrasse 80 Postfach 10 51 49, D-2000 Hamburg 28 (DE)**

## Beschreibung

Die Erfindung betrifft eine Anordnung zur programmierbaren Steuerung einer Rundfunk- und/oder Fernseh-Empfangseinrichtung mit einem Speicher, der vom Benutzer über eine Bedienungseinrichtung einzugebende Programmierdaten für Sendungen aufnimmt und abgibt, und mit einem Vergleicher, der die Programmierdaten mit Kennsignalen vergleicht und bei Übereinstimmung eine Ausgabe-Steuerung in der Empfangseinrichtung auslöst, die die Aufzeichnung oder Wiedergabe der Empfangssignale über die Empfangseinrichtung bewirkt.

Derartige Anordnungen sind für Fernseh-Empfangseinrichtungen bekannt, beispielsweise aus der Zeitschrift "Funkschau" 1978, Heft 9, Seiten 405 bis 407. Dabei enthalten die Programmierdaten die Uhrzeit des Beginns einer Sendung, und die Kennsignale sind die Signale einer elektronischen Uhr.

Ferner ist es auch aus der Zeitschrift "SMPTE Journal", Nov. 1977, Seiten 815 bis 818 bekannt, daß die Programmierdaten von Fernsehsendungen eine Nummer enthalten, die einer bestimmten Sendung zugeordnet ist und bei deren Aussenden mit übertragen wird. Dieses System ist unabhängig von der Uhrzeit, so daß insbesondere bei automatischer Aufzeichnung einer solchen Sendung auf Magnetband unabhängig von Zeitverschiebungen gegenüber der geplanten Sendezeit nur die tatsächlich gewünschte Sendung aufgezeichnet wird.

Mit den bekannten Anordnungen zur programmierbaren Steuerung sind zwar bereits eine ganze Anzahl von Steuerfunktionen möglich, die die Benutzung einer Fernseh-Empfangseinrichtung bzw. einer daran angeschlossenen Aufzeichnungseinrichtung erleichtern. Es können jedoch unter bestimmten Umständen Probleme entstehen, wenn nämlich die Sendezeiten von verschiedenen Sendungen, die zur Wiedergabe oder Aufzeichnunge programmiert worden sind, sich überschneiden.

Aufgabe der Erfindung ist es daher, eine Anordnung zur programmierbaren Steuerung einer Rundfunk- und/oder Fernseh-Empfangseinrichtung der eingangs genannten Art derart auszugestalten, daß der Bedienungskomfort durch Erhöhung der Steuerungsmöglichkeiten verbessert wird und insbesondere für den Fall von Sendezeitüberschneidungen eindeutige und vorhersehbare Funktionen ausgeführt werden.

Diese Aufgabe wird erfindungsgemäß dadurch gelöst, daß der Speicher für jede programmierte Sendung auch Prioritätsdaten enthält, die eine vom Benutzer bestimmte Priorität der Sendung angeben, und daß der Vergleicher auch die Prioritätsdaten vergleicht und nur diejenigen mit den Kennsignalen übereinstimmenden Programmierdaten, deren Prioritätsdaten sich in bestimmter Weise von den Prioritätsdaten der Programmierdaten anderer Sendungen unterscheiden, der Ausgabe-Steuerung zuführt. Durch die Verwendung zusätzlicher Prioritätsdaten ist es möglich, auch im Konfliktfall, bei dem zumindest teilweise gleichzeitig zwei programmierte Sendungen empfangen werden, eine eindeutige Entscheidung zu treffen und die Sendung mit der höheren Priorität auch tatsächlich vollständig wiederzugeben. Die niedrigsten bzw. negativsten Prioritätsdaten können auf eine besonders vorteilhafte Weise verwendet werden. Nach einer vorteilhaften Ausgestaltung der Erfindung stellen bestimmte Werte der Prioritätsdaten Sperrdaten dar, die die Wiedergabe der damit programmierten Sendung sperren. Damit ist es insbesondere möglich, eine sogenannte "Kindersicherung" zu realisieren, indem nämlich die Programmierdaten solcher Sendungen mit Sperrdaten versehen werden, die von Kindern beispielsweise bei Abwesenheit der Eltern nicht gesehen oder gehört werden sollen. Damit ist eine sehr viel flexiblere Verwendung der Programmierbarkeit von Sendungen möglich, die auch bei reinen Tonempfangsgeräten einsetzbar ist.

Wenn während des Empfangs einer Sendung eine weitere, ebenfalls programmierte Sendung mit gleicher Priorität beginnt, was insbesondere bei unvorhergesehenen zeitlichen Verschiebungen von Sendungen auftreten kann, sollte die bereits laufende Sendung weiter wiedergegeben oder aufgezeichnet werden. Damit aber insbesondere im Falle der Darstellung von Sendungen der Benutzer erkennt, daß zwei prioritätsgleiche Sendungen empfangen werden, ist es zweckmäßig, daß der Vergleicher ein Kollisionssignal während der Zeit erzeugt, in der die Prioritätsdaten von mehr als einer Sendung übereinstimmen, deren Programmierdaten den Kennsignalen entsprechen. Damit erhält der Benutzer die Möglichkeit, den Anfang der später beginnenden prioritätsgleichen Sendung zu prüfen und ggf. seine ursprünglich getroffene Prioritätsentscheidung zu ändern.

Die Eingabe der Programmierdaten kann auf verschiedene Weise erfolgen, beispielsweise über eine Fernbedienungseinrichtung oder auch mittels eines Strichmarkierungslesers, wenn die Programmhefte mit solchen Strichmarkierungen für die einzelnen Sendungen versehen sind. Eine andere Möglichkeit besteht bei Fernseh-Empfangseinrichtungen mit Videotext- und Bildschirmtexteinrichtungen darin, daß die Programmierdaten aus empfangenen Daten, die auf dem Bildschirm der Fernseh-Empfangsanordnung als Zeichen sichtbar dargestellt sind, durch optische Markierung mit einem durch die Bedienungseinrichtung steuerbaren Cursor auf dem Bildschirm ausgewählt und durch weitere Steuersignale der Bedienungseinrichtung in den Speicher eingeschrieben werden, wobei die Prioritätsdaten über die Bedienungseinrichtung hinzugefügt werden. Auf diese Weise brauchen nur wenige Daten über die Bedienungseinrichtung, insbesondere die Fernbedienung eingegeben zu werden, so daß sich eine bequeme Handhabung der Anordnung durch den Benutzer ergibt. Auch die Programmierung einer Ton-Empfangsanordnung kann so vorgenommen werden. Die empfangenen Daten müssen nicht nur über die Antenne, sondern können beispielsweise auch über einen Telefonanschluß empfangen werden.

Die Kennsignale, die in dem Vergleicher mit den Programmierdaten verglichen werden, können auf verschiedene Weise erzeugt sein bzw. von verschiedenen Quellen stammen. Eine Möglichkeit besteht darin, daß die Kennsignale die Zeitsignale einer in der Empfangseinrichtung vorhandenen elektronischen Uhr sind. Eine andere Möglichkeit besteht dagegen darin, daß die Kennsignale aus den empfangenen Signalen abgeleitet sind. Dabei können die empfangenen Signale ebenfalls Zeitsignale sein, die von einer im Sender vorhandenen elektronischen Uhr stammen, oder sie können codierte Steuersignale sein, die den Sendungen spezifisch zugeordnet sind. Im letzteren Falle ist es bei einer Fernseh-Empfangsanordnung zweckmäßig, daß die Kennsignale aus in Abtastlucken der Bildsignale im Empfangssignal übertragenen Datensignalen abgeleitet sind.

Besondere Vorteile ergibt die Kombination der vorstehend angegebenen Möglichkeiten dahingehend, daß die Kennsignale sowohl die Zeitsignale einer elektronischen Uhr als auch von Empfangssignalen abgeleitete Signale sind und daß der Vergleicher die gleichzeitige Übereinstimmung aller Kennsignale mit den Programmierdaten prüft. Damit ist es möglich, Zeitabschnitte bzw. Zeitfenster zu programmieren, in denen Sendungen einer bestimmten Sendungsart, wie beispielsweise Politik, Sport, Wissenschaft, Unterhaltung dargestellt werden, ohne daß diese Sendungen im einzelnen programmiert sind. Voraussetzung dabei ist selbstverständlich, daß mit jeder Sendung ein Signal bzw. eine digitale Information mitgesendet wird, die die Sendungsart angibt, zu der diese Sendung gehört.

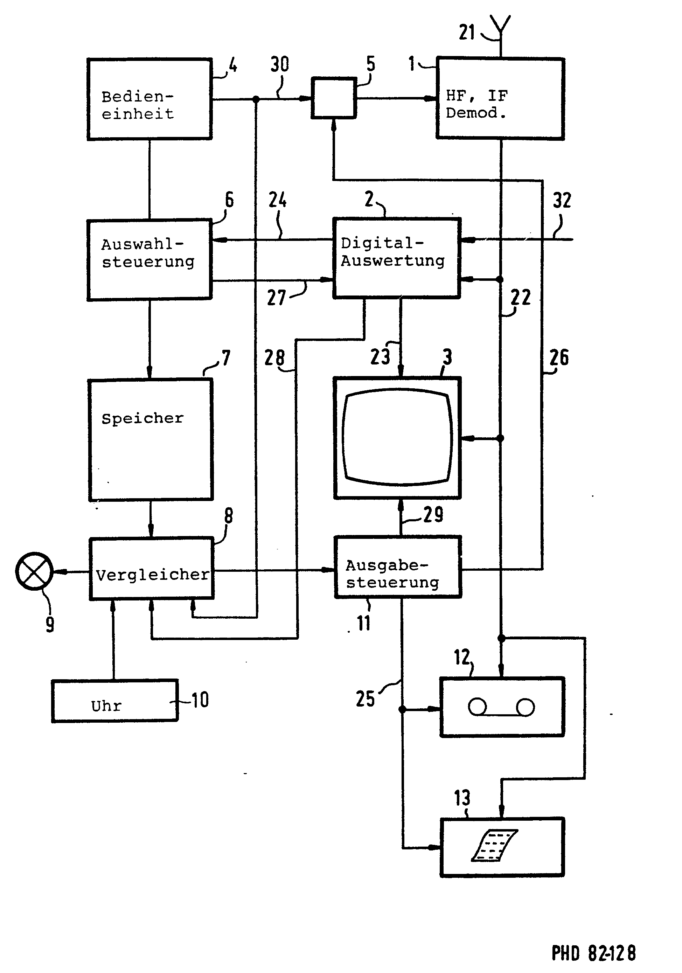

Ein Ausführungsbeispiel der Erfindung für eine Fernseh-Empfangsanordnung wird nachstehend anhand der Zeichnung näher erläutert. Die Abwandlungen für eine Ton-Empfangsanordnung bzw. eine kombinierte Anordnung ergeben sich ohne weiteres daraus bzw. werden an entsprechende Stelle angedeutet.

Darin werden die an der Antenne 21 empfangenen Hochfrequenzsignale, die auch von Satelliten in einem sehr hohen Frequenzbereich empfangene und umgesetzte Signale oder über Kabel zugeführte Signale sein können, einem üblichen selektiven HF- und ZF-Verstärker mit Demodulator zugeführt, der das demodulierte Signal einschließlich der mit übertragenen digitalen Information auf der Leitung 22 abgibt. Die Einstellung des Empfangsverstärkers 1 auf einen bestimmten Sender erfolgt über die Abstimmeinheit 5, die sowohl über die Leitung 30 von einer Bedienungseinheit 4 als auch über die Leitung 26 von einer Ausgabesteuerung 11 gesteuert wird.

Das auf der Leitung 22 vorhandene demodulierte Bild- und Tonsignal wird einer Wiedergabeanordnung 3 zugeführt, die eine Bildröhre mit zugehörigen üblichen Ablenkschaltungen sowie einen Tonverstärker mit Lautsprecher enthält. Ferner wird das Signal auf der Leitung 22 einer Aufzeichnungseinrichtung 12 zugeführt, die durch einen Video-Recorder gebildet sein kann, sowie ggf. weiteren Aufzeichnungsgeräten wie einem Drucker 13. Auch die Aufzeichnungseinrichtungen 12 und 13 werden zumindest zusätzlich von der Ausgabesteuerung 11 über die Leitung 25 gesteuert.

Ferner wird das Signal auf der Leitung 22 einer digitalen Auswerteschaltung 2 zugeführt, die die digitalen Informationen, die mit dem Bildsignal insbesondere in den Bildaustastlücken übertragen werden, von dem Bildsignal abtrennt und dekodiert und zumindest teilweise speichert. Der digitalen Auswerteschaltung 2 kann digitale Information auch von einem Telefonanschluß über die Leitung 32 zugeführt werden. Diese digitale Information enthält Text oder graphische Information und wird über die Leitung 23 der Wiedergabeanordnung 3 zugeführt, wo sie wahlweise anstelle der Bildinformation auf der Leitung 22 dargestellt werden kann. Dabei wird angenommen, daß die über die Leitung 23 übertragenen Signale bereits die aus der digitalen Information über einen Zeichengenerator gewonnenen Bildsignale zur direkten Ansteuerung der Wiedergabeanordnung 3 sind.

Bei einem reinen Ton-Empfangsgerät werden die digitalen Signale vom Tonsignal abgetrennt und ggf. auf einer Anzeigevorrichtung für z.B. nur eine Zeile angezeigt, wenn sie nicht nur für Steuerzwecke verwendet werden sollen.

Die digitalen Informationen werden ferner über die Leitung 24 einer Auswahlsteuerung 6 zugeführt, die ebenfalls Steuersignale von der Bedienungseinheit 4 empfängt, die beispielsweise der Empfangsteil einer Fernsteuerung sein kann. Der Ausgang der Auswahlsteuerung ist mit einem Speicher 7 für eine Anzahl Programmierdaten verbunden, die vollständig oder teilweise von dem Benutzer über die Bedienungseinheit 4 eingegeben werden. Ferner kann an die Bedienungseinheit 4 ein Markierungsleser angeschlossen sein, mittels dem der Benutzer beispielsweise aus Programmzeitschriften Markierungscodes ablesen und über die Auswahlsteuerung 6 in den Speicher 7 als Programmierdaten einschreiben kann. Wenn die in der digitalen Auswerteschaltung 2 empfangenen digitalen Informationen eine Programmvorschau bzw. einen Teil davon darstellt, können diese über die Leitung 24 auch der Auswahlschaltung 6 zugeführt werden. Diese digitalen Informationen enthalten dann außer der Bezeichnung der Sendungen auch das Datum und die Uhrzeit von deren voraussichtlichen Sendung sowie die Angabe des Senders und ggf. weitere Informationen über die einzelnen Sendungen. Über die Bedienungseinheit 4 und die Auswahlsteuerung 6 können über die Leitung 27 der digitalen Auswerteschaltung 2 Steuersignale übertragen werden, die eine bestimmte Sendung der auf der Wiedergabeanordnung 3 dargestellten Programmvorschau markieren, beispielsweise mit Hilfe eines Cursors oder durch Unterstreichung oder Invertierung der betreffenden Zeile in der Programmvorschau. Der Ort dieser Markierung kann durch die ·Bedienungseinheit 4 nach oben oder unten, d.h. auf eine andere Sendung verschoben werden. Bei Eingabe eines Speicherbefehls über die Bedienungseinheit 4 werden die wichtigsten der zu der markierten Sendung gehörenden und über die Leitung 24 der Auswahlsteuerung 6 zugeführten digitalen Informationen in dem Speicher 7 als Programmierdaten abgespeichert. Zusätzlich können über die Bedienungseinheit 4 noch weitere Informationen zugefügt werden, wie später erläutert wird.

Die Programmierdaten aus dem Speicher 7 werden einem Vergleicher 8 zugeführt, wo sie mit Kenndaten verglichen werden. Diese Kenndaten werden insbesondere durch Zeitsignale von einer elektronischen Uhr 10 gebildet, die in der Empfangsanordnung vorhanden ist,und geben jeweils das momentane Datum und die Uhrzeit an. Anstelle der Zeitsignale aus der elektronischen Uhr 10 können auch aus den empfangenen digitalen Information abgeleitete Zeitsignale verwendet werden, und zusätzlich zu diesen konnen die Programmierdaten aus dem Speicher 7 auch mit bestimmten im Bildsignal (bzw. im Tonsignal bei einem Tonempfänger) auf der Leitung 22 enthaltenen digitalen Daten verglichen werden, die von der digitalen Auswerteschaltung 2 über die Leitung 28 dem Vergleicher 8 zugeführt werden. Außerdem wird dem Vergleicher 8 von der Leitung 30 das Abstimmsignal von der Bedienungseinheit 4 zugeführt.

Ein Ausgang des Vergleichers 8 führt auf eine Ausgabesteuerung 11 und liefert dieser Steuersignale, wenn bestimmte aus dem Speicher 7 ausgelesene Programmierdaten mit den dem Vergleicher 8 zugefuhrten Kennsignalen zumindest teilweise übereinstimmen. Diese Ausgabesteuerung 11 steuert entsprechend den übereinstimmenden Programmierdaten die Wiedergabeanordnung 3 sowie über die Leitung 26 die Abstimmeinheit 5 und ggf. die Aufzeichnungsanordnungen 12 und 13. Unter bestimmten Bedingungen, die nachstehend erläutert werden, steuert der Vergleicher 8 auch eine Anzeige 9 an.

Für die Erläuterung der Funktion der dargestellten Anordnung, die in entsprechender Weise auch für Tonempfänger gilt, wird zunächst angenommen, daß bei Empfang einer Sendung keine weiteren diese Sendung kennzeichnenden Daten empfangen werden, so daß der Vergleicher 8 nur die Signale der elektronischen Uhr 10 empfängt. Die Programmierdaten in dem Speicher 7 enthalten dann für jede programmierte Sendung nur die Uhrzeit von deren Beginn und deren Ende sowie die Angabe des Senders bzw. dessen Frequenz, die über die Bedienungseinheit 4 auf eine der erwähnten Arten eingegeben wurden, und außerdem eine Prioritätszahl, die ebenfalls mit den anderen Programmierdaten der jeweiligen Sendung über die Bedienungseinheit eingegeben wurden.

Im Betrieb werden nun aus dem Speicher 7 wiederholt nacheinander die Programmierdaten der einzelnen Sendungen ausgelesen und dem Vergleicher 8 zugeführt. Dies kann mit Hilfe eines als Zähler ausgebildeten Adressengenerators für den Speicher 7 erfolgen, der in der Figur der Übersichtlichkeit halber nicht näher dargestellt ist. Der Vergleicher 8 vergleicht die die Uhrzeit angebenden Daten der Programmierdaten mit den von der elektronischen Uhr 10 gelieferten Kenndaten, und bei Übereinstimmung dieser Daten bei einer bestimmten programmierten Sendung werden die zugehörigen Angaben für die Frequenz des Senders über die Ausgabesteuerung 11 und die Leitung 26 der Senderauswahlschaltung 5 zugeführt, die den Empfangsverstärker 1 auf den betreffenden Sender einstellt. Gleichzeitig speichert der Vergleicher 8 die zu dieser programmierten Sendung gespeicherte Prioritätszahl zwischen.

Auch nach dem Auffinden einer programmierten Sendung wird das wiederholte Auslesen des Speichers 7 fortgesetzt, und wenn nun eine andere programmierte Sendung festgestellt wird, deren Uhrzeitdaten mit den von der elektronischen Uhr 10 gelieferten Daten übereinstimmen, wird die Prioritätszahl dieser anderen Sendung mit der zwischengespeicherten Prioritätszahl verglichen. Wenn die Prioritätszahl der anderen Sendung größer ist als die zwischengespeicherte, wird die größere Prioritätszahl zwischengespeichert, und die zugehörigen Frequenzdaten werden der Senderauswahlschaltung 5 zugeführt, so daß nun die Sendung mit der höheren Prioritätszahl dargestellt wird. Auf diese Weise wird, auch wenn zufällig zwei Sendungen mit gleichem Beginn oder zumindest teilweise gleicher Sendezeit programmiert wurden, eine eindeutige Entscheidung getroffen.

Falls jedoch zwei Sendungen mit gleicher Prioritätszahl und zumindest teilweiser zeitlicher Überschneidung gespeichert sind, d.h. die Prioritätszahl der anderen Sendung ist ebenso groß wie die zwischengespeicherte Prioritätszahl, gibt es zumindest zwei Möglichkeiten, eine Entscheidung zu treffen. Einerseits kann die bereits eingestellte bzw. bereits laufende Sendung, deren Prioritätszahl zwischengespeichert ist, weiter dargestellt bzw. aufgenommen werden, wobei der Vergleicher 8 dann jedoch die Anzeige 9 ansteuert, um den Benutzer darauf hinzuweisen, daß mindestens zwei Sendungen mit gleicher Prioritätszahl für den gleichen Zeitabschnitt gespeichert sind. Der Benutzer kann dann entscheiden, ob er auf die andere Sendung umschalten will. Andererseits kann auch die zuletzt im Speicher 7 gefundene Sendung eingestellt werden, wobei ebenfalls die Anzeige 9 angesteuert wird. Auch hierbei hat der Benutzer die Möglichkeit, auf die vorher empfangene Sendung zurückzuschalten. Die Wahl zwischen diesen beiden Möglichkeiten kann vom Gerätehersteller festgelegt oder vom Benutzer einstellbar sein.

Wenn bei einer gespeicherten Sendung, bei der die die Uhrzeit angebenden Daten mit den von der elektronischen Uhr 10 gelieferten Kenndaten übereinstimmen, jedoch die Prioritätsdaten eine Sperrung angeben, vergleicht der Vergleicher 8 die zugehörigen Frequenzdaten z.B. als Kanalnummer dieser Sendung mit den über die Leitung 30 zugeführten Frequenzdaten, die die gerade eingestellte Sendung angeben, da eine solche Sendung dann nur über die Bedienungseinheit 4 eingestellt sein kann. Wenn die Frequenzdaten übereinstimmen, liefert der Vergleicher 8 der Ausgabesteuerung 11 ein Sperrsignal, durch die über die Leitung 29 die Darstellung bzw. Wiedergabe der eingestellten Sendung gesperrt wird. Sobald über die Bedienungseinheit 4 ein anderer Sender eingestellt wird, wird die Sperrung dann automatisch aufgehoben, da dann keine Gleichheit der Senderdaten aus dem Speicher 7 und der von der Bedienungseinheit 4 eingestellten Senderdaten vorliegt.

Als Sperrdaten werden am günstigsten bestimmte Werte der Prioritätsdaten in der Weise verwendet, daß die kleinste bzw. eine negative Priorität nicht mit einer etwa zwischengespeicherten Priorität verglichen wird, sondern als Sperrsignal ausgewertet wird.

Zusätzlich zu den Prioritätsdaten können im Speicher 7 auch noch Daten abgespeichert werden, die angeben, daß die eingestellte Sendung nicht auf der Wiedergabeanordnung 3 dargestellt wird, sondern mit dem Aufzeichnungsgerät 12 aufgenommen bzw. über den Drucker 13 ausgegeben werden soll. Hierfür steuert die Ausgabesteuerung 11 die entsprechenden Geräte über die Verbindung 25 an, die tatsächlich eine Mehrfachleitung darstellt. Auch hierbei kann die Möglichkeit, Prioritätsdaten zu speichern, vorteilhaft verwendet werden, um beispielsweise bei zeitüberschneidenden Sendungen die mit jeweils höchster Priorität aufzuzeichnen.

Bei der Abspeicherung von Programmierdaten für eine Sendung kann übrigens, falls der Benutzer keine ausdrücklichen Prioritätsdaten hinzufügt, automatisch Prioritätsdaten mit beispielsweise mittlerer Priorität hinzugefügt werden. Auf diese Weise ist für jede gespeicherte Sendung eine eindeutige Aussage möglich.

Falls bei jeder Sendung eine vollständige Programmvorschau über alle Sendungen mitgeliefert wird, insbesondere in bestimmten Bildzeilen während des Bildrücklaufs, können die im Speicher 7 gespeicherten Programmierdaten übersichtlich dargestellt werden. Dafür wird nun der Speicher 7 nicht zyklisch ausgelesen, sondern zunächst werden nur die Programmierdaten der ersten Sendung ausgelesen, und gleichzeitig werden die empfangenen digitalen Vorschaudaten in der digitalen Auswerteschaltung 2 dekodiert und über die Leitung 28 dem Vergleicher 8 zugeführt. Sobald die Programmierdaten mit den Vorschaudaten übereinstimmen, werden in der digitalen Auswerteschaltung 2 die weiteren Daten, die den Klartext zu der entsprechenden Sendung darstellen, gespeichert. Anschließend werden aus dem Speicher 7 die Programmierdaten der folgenden Sendung ausgelesen, und in entsprechender Weise werden in der digitalen Auswerteschaltung 2 die Daten für den Klartext der zweiten gespeicherten Sendung abgespeichert. Wenn auf diese Weise alle Programmierdaten im Speicher 7 mit den Vorschaudaten verglichen und die entsprechenden Klartextdaten in der digitalen Auswerteschaltung 2 abgespeichert sind, werden diese über die Leitung 23 der Wiedergabeanordnung 3 zugeführt, so daß nun die vollständige Liste der gespeicherten Sendungen mit allen wesentlichen Angaben erscheint.

Bei einem weiteren Ausbau der empfangenen Programmvorschaudaten kann jede Sendung in der Programmvorschau mit einer individuellen Kennzahl versehen werden, die bei der Darstellung der Programmvorschau nicht unbedingt mit dargestellt werden muß. In einer solchen Ausbaustufe werden dann zusätzlich zu den Uhrzeitdaten einer ausgewählten Sendung oder anstelle dieser Daten die entsprechende Kennzahl im Speicher 7 mit den Prioritätsdaten gespeichert. In diesem Falle werden bei der Einstellung einer programmierten Sendung nicht nur die Kenndaten der elektronischen Uhr 10, sondern auch bzw. statt dessen die von der digitalen Auswerteschaltung 2 entschlüsselten Kennzahlen der gerade laufenden Sendung entschlüsselt und über die Leitung 28 dem Vergleicher 8 zugeführt. Die weiteren Abläufe, insbesondere auch die Prioritätssteuerung oder die Sperrung, erfolgen in gleicher Weise wie bei einem reinen Uhrzeitvergleich. Der Vorteil ist nun jedoch, daß in den Fällen, in denen eine Verschiebung einer tatsächlichen Sendezeit gegenüber der in der Vorschau angegebenen und damit programmierten Zeit auftritt, nun eine programmierte Sendung tatsächlich erst dann eingeschaltet und wiedergegeben bzw. aufgenommen wird, wenn sie tatsächlich beginnt. Die korrekte Funktion der Anordnung bleibt dann auch bei Sendezeitüberschneidungen erhalten, die in der Programmplanung nicht vorgesehen waren, da jeweils die Sendung wiedergegeben bzw. aufgenommen wird, deren Programmierdaten die höchste Prioritätszahl enthält. Die Steuerung bei der zeitlichen Überschneidung von Sendungen mit gleicher Priorität kann im übrigen für die Wiedergabe anders sein als für die Aufzeichnung. Auch der Betrieb von mehreren Aufzeichnungsgeräten an der beschriebenen Anordnung zur getrennten Aufzeichnung von sich überschneidenden Sendungen ist möglich.

Noch weitergehende Anwendungsmöglichkeiten der beschriebenen Anordnung ergeben sich, wenn zusätzlich zu den Kennzahlen der Sendungen bzw. in diesen enthalten auch Daten in der Programmvorschau bzw. mit der jeweiligen Sendung übertragen werden, die die Art der Sendung angeben, wobei Nachrichten, Sportübertragungen, politische Sendungen, Musiksendungen usw. Beispiele für verschiedene Sendungsarten sein können. Wenn angenommen wird, daß die die Sendungsart angebenden Daten zusätzlich vorhanden sind, kann anstelle der Uhrzeit bzw. der Kennzahl einer bestimmten Sendung als Programmierdaten auch eine Sendungsart zusammen mit einer Uhrzeit bzw. einem Uhrzeitbereich gespeichert werden. Auch hier ist die zusätzliche Speicherung von Prioritätsdaten und Sperrdaten in gleicher Weise möglich. Die Daten für die Sendungsart der empfangenen Sendung werden ebenfalls über die Leitung 28 von der digitalen Auswerteschaltung 2 dem Vergleicher 8 zugeführt. Dadurch werden innerhalb des programmierten Zeitbereichs, der durch Vergleich mit den Kenndaten von der elektronischen Uhr 10 im Vergleicher 8 festgestellt wird, alle Sendungen dargestellt, bei denen die Sendungsart entsprechend der über die Leitung 28 dem Vergleicher 8 zugeführten Daten mit den programmierten Daten übereinstimmt, auf der Wiedergabeanordnung 3 wiedergegeben oder mit der Aufzeichnungsanordnung 12 aufgezeichnet. Wenn zusätzlich bestimmte Sendungen programmiert sind, die in diesen Zeitbereich hineinfallen, können diese vorrangig behandelt werden oder abhängig von der dabei programmierten Priorität.

In entsprechender Weise können dann auch Zeitbereiche programmiert werden, in denen bestimmte Sendungsarten gesperrt werden.

Mit der beschriebenen Anordnung kann auf diese Weise gegenüber der einfachen Vorwahl von bestimmten Sendungen zu bestimmten Zeiten mit nur wenig zusätzlichem Aufwand eine erheblich flexiblere und komfortablere Programmierung durchgeführt werden, die die möglichen Bedürfnisse eines Benutzers weitgehend erfüllt.

## Patentansprüche

1. Anordnung zur programmierbaren Steuerung einer Rundfunk- und/oder Fernseh- Empfangseinrichtung mit einem Speicher (7), der vom Benutzer über eine Bedienungseinrichtung (4) einzugebende Programmierdaten für Sendungen aufnimmt und abgibt, und mit einem Vergleicher (8), der die Programmierdaten mit Kennsignalen vergleicht und bei Übereinstimmung eine Ausgabe-Steuerung (11) in der Empfangseinrichtung auslöst, die die Aufzeichnung oder Wiedergabe der Empfangssignale über die Empfangseinrichtung bewirkt, dadurch gekennzeichnet, daß der Speicher (7) für jede programmierte Sendung auch Prioritätsdaten enthält, die eine vom Benutzer bestimmte Priorität der Sendung angeben, und daß der Vergleicher (8) auch die Prioritätsdaten vergleicht und nur diejenigen mit den Kennsignalen übereinstimmenden Programmierdaten, deren Prioritätsdaten sich in bestimmter Weise von den Prioritätsdaten der Programmierdaten anderer Sendungen unterscheiden, der Ausgabe-Steuerung (11) zuführt.

2. Anordnung nach Anspruch 1, dadurch gekennzeichnet, daß bestimmte Werte der Prioritätsdaten Sperrdaten darstellen, die die Wiedergabe der damit programmierten Sendungen sperren.

3. Anordnung nach Anspruch 1, dadurch gekennzeichnet, daß der Vergleicher (8) ein Kollisionssignal während der Zeit erzeugt, in der die Prioritätsdaten von mehr als einer Sendung übereinstimmen, deren Programmierdaten den Kennsignalen entsprechen.

4. Anordnung nach Anspruch 1 oder 2 für Fernseh-Empfangseinrichtungen mit Videotext- und Bildschirmtexteinrichtungen, dadurch gekennzeichnet, daß die Programmierdaten aus empfangenen Daten, die auf dem Bildschirm (3) der Fernseh-Empfangsanordnung als Zeichen sichtbar dargestellt sind, durch optische Markierung mit einem durch die Bedienungseinrichtung (4) steuerbaren Cursor auf dem Bildschirm (3) ausgewählt und durch weitere Steuersignale der Bedienungseinrichtung (4) in den Speicher (7) eingeschrieben werden, wobei die Prioritätsdaten über die Bedienungseinrichtung (4) hinzugefügt werden.

5. Anordnung nach einem einem der Ansprüche 1 bis 4, dadurch gekennzeichnet, daß die Kennsignale die Zeitsignale einer in der Empfangseinrichtung vorhandenen elektronischen Uhr (10) sind.

6. Anordnung nach einem der Ansprüche 1 bis 4, dadurch gekennzeichnet, daß die Kennsignale aus den empfangenen Signalen abgeleitet sind.

7. Anordnung nach Anspruch 6 für eine Fernseh-Empfangseinrichtung, dadurch gekennzeichnet, daß die Kennsignale aus in Abtastlücken der Bildsignale im Empfangssignal übertragenen Datensignalen abgeleitet sind.

8. Anordnung nach einem der Ansprüche 1 bis 4, dadurch gekennzeichnet, daß die Kennsignale sowohl die Zeitsignale einer elektronischen Uhr (10) als auch von Empfangssignalen abgeleitete Signale sind und daß der Vergleicher (8) die gleichzeitige Übereinstimmung aller Kennsignale mit den Programmierdaten prüft.

### Claims

1. An arrangement for the programmable control of a radio- and/or television receiver comprising a memory (7) for storing and outputting transmission programming data which are entered by the user by means of a control arrangement (4), and comprising a comparator (8) which compares the programming data to identification signals and when there is agreement triggers a control arrangement (11) in the receiver which effects the recording of reproduction of the receiving signals via the receiver, characterized in that the memory (7) comprises for each programmed transmission also priority data which indicate a transmission priority, determined by the user and that the comparator (8) also compares the priority data and only applies to the control arrangement (11) the programming data which correspond to the identification signals, and whose priority data distinguish themselves in a predetermined way from the priority data of the programme data of other transmissions.

2. An arrangement as claimed in Claim 1, characterized in that given values of the priority data represent blocking data, which values block the reproduction of the transmissions programmed therewith.

3. An arrangement as claimed in Claim 1, characterized in that the comparator (8) produces a " collision signal" during the period of time in which there is agreement between the priority data of more than one transmission whose programming data correspond to the identification signals.

4. An arrangement as claimed in Claim 1 or 2, for television receivers comprising teletext and view data devices, characterized in that the programming data are selected from received data which are displayed on the picture screen (3) of the television receiver as characters, by optical marking by means of a "cursor" which is controllable by the control arrangement (4) on the picture screen (3), these programming data being written into the memory (7) by further control signals from the control arrangement (4), the priority data being added via the control arrangement (4).

5. An arrangement as claimed in any one of Claims 1 to 4, characterized in that the identification signals are the time signals of an electronic clock (10) included in the receiver.

6. An arrangement as claimed in any one of Claims 1 to 4, characterized in that the identification signals are derived from the received signals.

7. An arrangement as claimed in Claim 8, for a television receiver characterized in that the identification signals are derived from data signals transmitted during the scanning intervals in the picture signals in the receiving signal.

8. An arrangement as claimed in any one of Claims 1 to 4, characterized in that the identification signals are signals derived from the time signals from an electronic clock (10) and also from receiving signals and that the comparator (8) checks whether there is simultaneous agreement between all the identifications signals and the programming data.

### Revendications

1.- Dispositif pour la commande programmée d'un récepteur de radio et/ou de télévision comportant une mémoire (7), qui enregistre et fournit des données de programmation d'émissions à introduire par l'utilisateur par l'intermédiaire d'un dispositif de manipulation (4), et un comparateur (8), qui compare les données de programmation à des signaux d'identification et, dans le cas d'une concordance, déclenche un dispositif de commande de sortie (11) dans le récepteur qui provoque l'enregistrement ou la reproduction des signaux de réception par l'intermédiaire du récepteur, caractérisé en ce que la mémoire (7) contient aussi, pour chaque émission programmée, des données de priorité qui indiquent une priorité de l'émission déterminée par l'utilisateur et que le comparateur (8) compare aussi les données de priorité et n'applique au dispositif de commande de sortie (11) que les données de programmation concordant avec les signaux d'identification dont les données de priorité se distinguent d'une manière déterminée des données de priorité des données de programmation d'autres émissions.

2.- Dispositif suivant la revendication 1, caractérisé en ce que certaines valeurs des données de priorité constituent des données de blocage qui bloquent la reproduction des émissions programmées avec elles.

3.- Dispositif suivant la revendication 1, caractérisé en ce que le comparateur (8) produit un signal de collision pendant le temps au cours duquel les données de priorité de plus d'une émission dont les données de programmation correspondent aux signaux d'identification sont concordantes.

4.- Dispositif suivant l'une des revendications 1 ou 2, pour des récepteurs de télévision équipés de systèmes de vidéotexte et d'inscription sur écran, caractérisé en ce que les données de programmation peuvent être sélectionnées par marquage optique sur l'écran (3) au moyen d'un curseur pouvant être piloté par le dispositif de manipulation (4) à partir de données reçues qui sont visualisées sous la forme de signes sur l'écran du récepteur de télévision et peuvent être enregistrées dans la mémoire (7) sous l'effet d'autres signaux de commande provenant du dispositif de manipulation (4), les données de priorité étant ajoutées par l'intermédiaire du dispositif de manipulation (4).

5.- Dispositif suivant l'une quelconque des revendication 1 à 4, caractérisé en ce que les signaux d'identification sont les signaux de temps d'une horloge électronique (10) présente dans le récepteur.

6.- Dispositif suivant l'une quelconque des revendications 1 à 4, caractérisé en ce que les signaux d'identification sont dérivés des signaux reçus.

7.- Dispositif suivant la revendication 6, pour un récepteur de télévision, caractérisé en ce que les signaux d'identification sont dérivés de signaux de données transmis dans des trous d'analyse des signaux d'image dans le signal de réception.

8.- Dispositif suivant l'une quelconque des revendications 1 à 4, caractérisé en ce que les signaux d'identification sont tant les signaux de temps d'une horloge électronique (10) que des signaux dérivés de signaux de réception et que le comparateur (8) vérifie la concordance simultanée de tous les signaux d'identification avec les données de programmation.